(19) Europäisches Patentamt / European Patent Office / Office européen des brevets

(11) **EP 4 622 182 A1**

(12) **EUROPEAN PATENT APPLICATION**
published in accordance with Art. 153(4) EPC

(43) Date of publication:
**24.09.2025 Bulletin 2025/39**

(21) Application number: **23942712.3**

(22) Date of filing: **26.06.2023**

(51) International Patent Classification (IPC):
**H04L 12/18** (2006.01)  **H04L 47/125** (2022.01)

(52) Cooperative Patent Classification (CPC):
**H04L 12/18; H04L 47/125**

(86) International application number:
**PCT/CN2023/102392**

(87) International publication number:
**WO 2025/000183 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **New H3C Technologies Co., Ltd.**
**Hangzhou, Zhejiang 310052 (CN)**

(72) Inventor: **QIU, Yuanxiang**
**Beijing 100102 (CN)**

(74) Representative: **IPAZ**
**Bâtiment Platon**
**Parc Les Algorithmes**
**91190 Saint-Aubin (FR)**

(54) **METHOD AND APPARATUS FOR MULTICAST TUNNEL LOAD BALANCING, GATEWAY DEVICE, AND STORAGE MEDIUM**

(57) Embodiments of the present application relate to the technical field of network communications, and provide a method and an apparatus for multicast tunneling load balancing, a gateway device, and a storage medium. The method is applied to the gateway device which has established AMT tunnels with a plurality of relay devices. The method specifically comprises: receiving a multicast join request packet sent by a multicast receiver, wherein the multicast join request packet comprises information of a multicast group; acquiring a priority value and a load value of each of the plurality of relay devices, wherein the priority value is used for representing the multicast service quality of the relay device; selecting from among the plurality of relay devices a target relay device for the multicast group on the basis of the priority value and the load value of each relay device; and sending a first member update packet to the target relay device, wherein the first member update packet comprises the information of the multicast group, such that the target relay device forwards a multicast data stream of the multicast group for the multicast receiver. Therefore, the forwarding efficiency of the multicast data stream can be improved.

Fig. 3

- receiving a Multicast Join Request packet sent by a multicast receiver — S301
- acquiring the priority value and the load value of each relay device among the multiple relay devices — S302
- selecting one target relay device for the multicast group from the multiple relay devices based on the priority value and the load value of each relay device — S303
- sending a first Membership Update packet to the target relay device — S304

**Description**

**Technical field**

The present disclosure relates to the technical field of network communications, and in particular to a method, an apparatus, a gateway device, and a storage medium for load balancing in multicast tunneling.

**Background**

Through the Automatic Multicast Tunneling (AMT) protocol, multicast receivers which do support native multicast protocols can connect to multicast sources and receive multicast traffic from the multicast sources.

The AMT protocol adopts a Client-Server mode, where a gateway device can determine the nearest relay device through anycast, and then join a multicast group maintained by the relay device as a multicast member, so that an AMT tunnel between the gateway device and the relay device is successfully established. Then, after receiving a multicast data stream from a multicast source, the relay device can send the multicast data stream to the gateway device through this AMT tunnel, and the gateway device then sends the multicast data stream to the multicast receiver.

After the AMT tunnel is successfully established, if the relay device is always closest to the gateway device in topology and the routing between the relay device and the gateway device is reachable, the gateway device will continue to acquire multicast data streams through this relay device. In this case, if the forwarding burden of the relay device is heavy, but the forwarding resources are not completely exhausted, it will lead to low forwarding efficiency of the multicast data streams.

**Summary**

The present disclosure provides a method, an apparatus, a gateway device, and a storage medium for load balancing in multicast tunneling, to solve the problem of low forwarding efficiency of multicast data streams acquired by gateway devices through relay devices with heavy forwarding burden and currently unexhausted forwarding resources. Specifically, the following solutions are included.

In a first aspect, an example of the present disclosure provides a method for load balancing in multicast tunneling, wherein the method is applied to a gateway device that has established AMT tunnels with multiple relay devices, and the method comprises:

receiving a Multicast Join Request packet sent by a multicast receiver, wherein the Multicast Join Request packet includes information about a multicast group;

acquiring a priority value and a load value of each relay device among the multiple relay devices, wherein the priority value is to represent multicast service quality of the relay device;

selecting one target relay device for the multicast group from the multiple relay devices based on the priority value and the load value of each relay device;

sending a first Membership Update packet to the target relay device, wherein the first Membership Update packet includes the information about the multicast group, so that the target relay device forwards a multicast data stream of the multicast group to the multicast receiver.

In one possible implementation, the gateway device is configured with an anycast address for each relay device included in a relay device group, and a process of establishing the AMT tunnels between the gateway device and the multiple relay devices comprises:

after the gateway device goes online, sending a Relay Discovery packet to each relay device included in the relay device group respectively, wherein each Relay Discovery packet contains a different anycast address;

within a first preset period, receiving Relay Advertisement packets sent by a first number of relay devices, wherein the Relay Advertisement packets include priority values of the relay devices;

establishing AMT tunnels with the first number of relay devices respectively and recording the priority values of the first number of relay devices;

recording priority values of a second number of relay devices as 0, wherein the second number of relay devices are relay devices in the relay device group which do not send a Relay Advertisement packet within the first preset period, and a sum of the first number and the second number is the number of relay devices included in the relay device group.

In one possible implementation, after recording the priority values of the first number of relay devices, the method further comprises:

sending Request packets to the first number of relay devices every second preset period;

receiving Membership Query packets sent by the first number of relay devices, wherein the Membership Query packets include the priority values of the relay devices;

updating the recorded priority values of the first number of relay devices based on the priority values included in the Membership Query packets.

In one possible implementation, selecting one target relay device for the multicast group from the multiple relay devices based on the priority value and the load value of each relay device, comprises:

acquiring a shared weight value of each relay device;

selecting shared weight values that exceed a preset threshold from multiple shared weight values;

selecting a relay device with a lowest load value as the target relay device from relay devices corresponding to the selected shared weight values.

In one possible implementation, acquiring the shared weight value of each relay device, comprises:

determining a shared weight value corresponding to the priority value of each relay device based on preset mapping relationships between priority values and shared weight values; or,

for each relay device, determining the shared weight value of the relay device as a ratio between the priority value of the relay device and a sum of the priority values of the multiple relay devices.

In one possible implementation, after sending the first Membership Update packet to the target relay device, the method further comprises:

in response to determining that the target relay device fails, acquiring the priority value of each relay device among the multiple relay devices other than the target relay device;

from the multiple relay devices other than the target relay device, reselecting a new target relay device for the multicast group based on the priority value and the load value acquired for each relay device;

sending a second Membership Update packet to the reselected target relay device, wherein the second Membership Update packet includes the information about the multicast group, so that the reselected target relay device forwards the multicast data stream of the multicast group to the multicast receiver.

In one possible implementation, a Relay Advertisement packet from a relay device includes a priority field, to carry the priority value of the relay device.

In one possible implementation, a Membership Query packet from a relay device includes a first tag bit field and a priority field, when a value of the first tag bit field is a first value, it indicates that the priority value of the relay device is carried in the priority field.

In one possible implementation, the Membership Query packet further includes a second tag bit field;

if a value of the second tag bit field is the first value, it indicates that the priority field is located after and adjacent to a gateway address field;

if the value of the second tag bit field is a second value, it indicates that the priority field is located after and adjacent to encapsulation information of a general query message.

In one possible implementation, the priority field occupies 8 reserved bits, when a value of the priority field is 0, it indicates that the priority field does not carry a priority value.

In one possible implementation, the priority value of a relay device is determined based on health parameters of the relay device, which includes any one or more of:

the number of accessible multicast sources;

network quality with the multicast sources;

failure ratios of transmission paths with the multicast sources;

quality of routing links with the multicast sources.

In one possible implementation, the load value of a relay device is the number of multicast groups for which the relay device is responsible.

In a second aspect, an example of the present disclosure provides an apparatus for load balancing in multicast tunneling, wherein the apparatus is applied to a gateway device that has established AMT tunnels with multiple relay devices, and the apparatus comprises:

a receiving module, to receive a Multicast Join Request packet sent by a multicast receiver, wherein the Multicast Join Request packet includes information about a multicast group;

an acquiring module, to acquire a priority value and a load value of each relay device among the multiple relay devices, wherein the priority value is to represent multicast service quality of the relay device;

a selecting module, to select one target relay device for the multicast group from the multiple relay devices based on the priority value and the load value of each relay device;

a sending module, to send a first Membership Update packet to the target relay device, wherein the first Membership Update packet includes the information about the multicast group, so that the target relay device forwards a multicast data stream of the multicast group to the multicast receiver.

In one possible implementation, the gateway device is configured with an anycast address for each relay device included in a relay device group, and a process of establishing the AMT tunnels between the gateway device and the multiple relay devices comprises:

after the gateway device goes online, sending a Relay Discovery packet to each relay device included in the relay device group respectively, wherein each Relay Discovery packet contains a different anycast address;

within a first preset period, receiving Relay Advertisement packets sent by a first number of relay devices, wherein the Relay Advertisement packets include priority values of the relay devices;

establishing AMT tunnels with the first number of relay devices respectively and record the priority values of the first number of relay devices;

recording priority values of a second number of relay devices as 0, wherein the second number of relay devices are relay devices in the relay device group which do not send a Relay Advertisement packet within the first preset period, and a sum of the first number and the second number is the number of relay devices included in the relay device group.

In one possible implementation, after recording the priority values of the first number of relay devices, the apparatus further comprises an updating module;

the sending module is further to send Request packets to the first number of relay devices every second preset period;

the receiving module is further to receive Membership Query packets sent by the first number of relay devices, wherein the Membership Query packets include the priority values of the relay devices;

the updating module is to update the recorded priority values of the first number of relay devices based on the priority values included in the Membership Query packets.

In one possible implementation, the selecting module is specifically to:

acquire a shared weight value of each relay device;

select shared weight values that exceed a preset threshold from multiple shared weight values;

select a relay device with a lowest load value as the target relay device from relay devices corresponding to the selected shared weight values.

In one possible implementation, the selecting module is specifically to:

determine a shared weight value corresponding to the priority value of each relay device based on preset mapping relationships between priority values and shared weight values; or,

for each relay device, determine the shared weight value of the relay device as a ratio between the priority value of the relay device and a sum of the priority values of the multiple relay devices.

In one possible implementation, the acquiring module is further to: in response to determining that the target relay device fails, acquire the priority value of each relay device among the multiple relay devices other than the target relay device;

the selecting module is further to: from the multiple relay devices other than the target relay device, reselect a new target relay device for the multicast group based on the priority value and the load value acquired for each relay device;

the sending module is further to: send a second Membership Update packet to the reselected target relay device, wherein the second Membership Update packet includes the information about the multicast group, so that the reselected target relay device forwards the multicast data stream of the multicast group to the multicast receiver.

In one possible implementation, a Relay Advertisement packet from a relay device includes a priority field, to carry the priority value of the relay device.
In one possible implementation, a Membership Query packet from a relay device includes a first tag bit field and a priority field, when a value of the first tag bit field is a first value, it indicates that the priority value of the relay device is carried in the priority field.
In one possible implementation, the Membership Query packet further includes a second tag bit field;

if a value of the second tag bit field is the first value, it indicates that the priority field is located after and adjacent to a gateway address field;

if the value of the second tag bit field is a second value, it indicates that the priority field is located after and adjacent to encapsulation information of a general query message.

In one possible implementation, the priority field occupies 8 reserved bits, when a value of the priority field is 0, it indicates that the priority field does not carry a priority value.
In one possible implementation, the priority value of a relay device is determined based on health parameters of the relay device, which includes any one or more of:

the number of accessible multicast sources;

network quality with the multicast sources;

failure ratios of transmission paths with the multicast sources;

quality of routing links with the multicast sources.

In one possible implementation, the load value of a relay device is the number of multicast groups for which the relay device is responsible.

In a third aspect, an example of the present disclosure provides a gateway device, which has established AMT tunnels with multiple relay devices and comprises:

a processor;

a transceiver;

a machine readable storage medium, which stores machine executable instructions that can be executed by the processor to cause the processor to:

receive a Multicast Join Request packet sent by a multicast receiver through the transceiver, wherein the Multicast Join Request packet includes information about a multicast group;

acquire a priority value and a load value of each relay device among the multiple relay devices, wherein the priority value is to represent multicast service quality of the relay device;

select one target relay device for the multicast group from the multiple relay devices based on the priority value and the load value of each relay device;

send a first Membership Update packet to the target relay device through the transceiver, wherein the first Membership Update packet includes the information about the multicast group, so that the target relay device forwards a multicast data stream of the multicast group to the multicast receiver.

In one possible implementation, the gateway device is configured with an anycast address for each relay device included in a relay device group, and the machine executable instructions further cause the processor to:

after the gateway device goes online, send a Relay Discovery packet to each relay device included in the relay device group respectively through the transceiver, wherein each Relay Discovery packet contains a different anycast address;

within a first preset period, receive Relay Advertisement packets sent by a first number of relay devices through the transceiver, wherein the Relay Advertisement packets include priority values of the relay devices;

establish AMT tunnels with the first number of relay devices respectively and record the priority values of the first number of relay devices;

record priority values of a second number of relay devices as 0, wherein the second number of relay devices are relay devices in the relay device group which do not send a Relay Advertisement packet within the first preset period, and a sum of the first number and the second number is the number of relay devices included in the relay device group.

In one possible implementation, the machine executable instructions further cause the processor to:

send Request packets to the first number of relay devices through the transceiver every second preset period;

receive Membership Query packets sent by the first number of relay devices through the transceiver, wherein the Membership Query packets include the priority values of the relay devices;

update the recorded priority values of the first number of relay devices based on the priority values included in the Membership Query packets.

In one possible implementation, the machine executable instructions cause the processor to:

acquire a shared weight value of each relay device;

select shared weight values that exceed a preset threshold from multiple shared weight values;

select a relay device with a lowest load value as the target relay device from relay devices corresponding to the selected shared weight values.

In one possible implementation, the machine executable instructions cause the processor to perform the following operations, comprising:

determining a shared weight value corresponding to the priority value of each relay device based on preset mapping relationships between priority values and shared weight values; or,

for each relay device, determining the shared weight value of the relay device as a ratio between the priority value of the relay device and a sum of the priority values of the multiple relay devices.

In one possible implementation, the machine executable instructions further cause the processor to:

in response to determining that the target relay device fails, acquire the priority value of each relay device among the multiple relay devices other than the target relay device;

from the multiple relay devices other than the target relay device, reselect a new target relay device for the multicast group based on the priority value and the load value acquired for each relay device;

send a second Membership Update packet to the reselected target relay device, wherein the second Membership Update packet includes the information about the multicast group, so that the reselected target relay device forwards the multicast data stream of the multicast group to the multicast receiver.

In one possible implementation, a Relay Advertisement packet from a relay device includes a priority field, to carry the priority value of the relay device.

In one possible implementation, a Membership Query packet from a relay device includes a first tag bit field and a priority field, when a value of the first tag bit field is a first value, it indicates that the priority value of the relay device is carried in the priority field.

In one possible implementation, the Membership Query packet further includes a second tag bit field;

if a value of the second tag bit field is the first value, it indicates that the priority field is located after and adjacent to a gateway address field;

if the value of the second tag bit field is a second value, it indicates that the priority field is located after and adjacent to encapsulation information of a general query message.

In one possible implementation, the priority field occupies 8 reserved bits, when a value of the priority field is 0, it indicates that the priority field does not carry a priority value.

In one possible implementation, the priority value of a relay device is determined based on health parameters of the relay device, which includes any one or more of:

the number of accessible multicast sources;

network quality with the multicast sources;

failure ratios of transmission paths with the multicast sources;

quality of routing links with the multicast sources.

In one possible implementation, the load value of a relay device is the number of multicast groups for which the relay device is responsible.

In a fourth aspect, an example of the present disclosure provides a machine readable storage medium, which stores machine executable instructions that, when called and executed by a processor, cause the processor to implement the method described in the first aspect.

In a fifth aspect, an example of the present disclosure provides a computer program product, which causes a processor to implement the method described in the first aspect.

Using the above technical solution, the gateway device can establish AMT tunnels with multiple relay devices. After receiving the Multicast Join Request packet sent by the multicast receiver, one target relay device can be selected for the multicast group that the multicast receiver requests to join, based on the priority value and the load value of each relay device, and then the target relay device forwards the multicast data stream of the multicast group to the multicast receiver.

Due to the comprehensive considerations of priority values and load values when selecting the target relay device, it can enable each relay device to share and forward multicast data streams for multiple multicast groups in a load sharing manner, fully utilizing the device resources of multiple relay devices, and improving the forwarding efficiency of multicast data streams.

## Brief Description of the Drawings

The drawings described here are intended to provide a further understanding of the present disclosure and form a part of it. The illustrative examples and the explanations thereof in the present disclosure are to explain the present disclosure and do not constitute an improper limitation of the present disclosure.

Fig. 1 is a schematic diagram of an AMT network architecture provided in an example of the present disclosure;

Fig. 2 is a flowchart of a method for establishing an AMT tunnel between a gateway device and a relay device provided in an example of the present disclosure;

Fig. 3 is a flowchart of a method for load balancing in multicast tunneling provided in an example of the present disclosure;

Fig. 4 is an exemplary schematic diagram of a Membership Query packet provided in an example of the present disclosure;

Fig. 5 is an exemplary schematic diagram of a Relay Advertisement packet provided in an example of the present disclosure;

Fig. 6 is a flowchart of another method for load balancing in multicast tunneling provided in an example of the present disclosure;

Fig. 7 is a schematic structural diagram of an apparatus of load balancing in multicast tunneling provided in an example of the present disclosure;

Fig. 8 is a schematic structural diagram of a gateway device provided in an example of the present disclosure.

## Detailed Description

In order to make the objective, technical solutions and advantages of the present disclosure clearer and more understandable, the present disclosure will be described in more detail below with reference to the accompanying drawings and examples. Obviously, the described examples are only some, and not all, of the examples of the present disclosure. All other examples obtained based on the examples of the present disclosure by those skilled in the art fall into the scope of protection of the present disclosure.

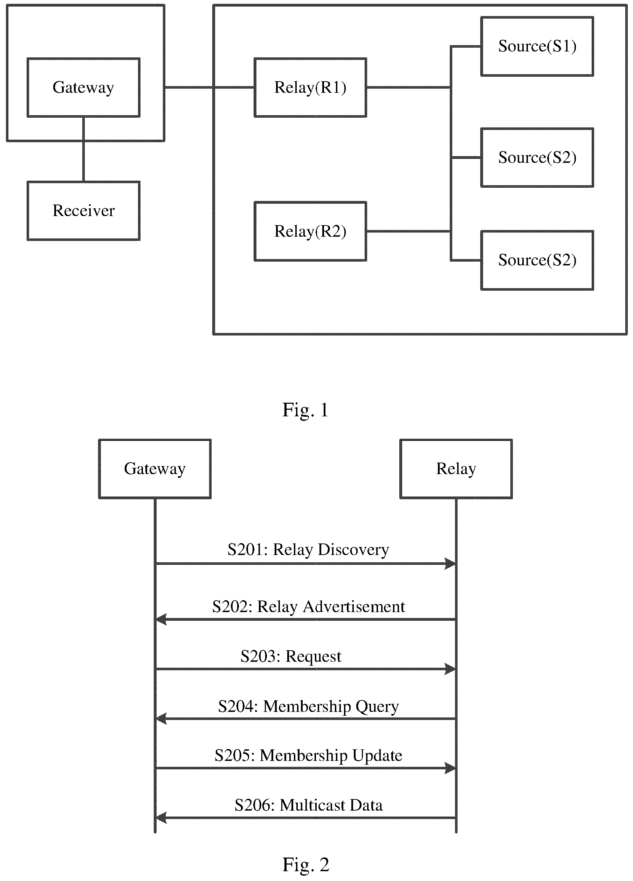

To facilitate the understanding of the scheme provided by the example of the present disclosure, the AMT network architecture involved in the example of the present disclosure is first introduced, as shown in Fig. 1. The AMT network architecture includes a multicast receiver (Receiver), a gateway device (Gateway), a relay device (Relay) R1, a relay device (Relay) R2, a multicast source (Source) S1, a multicast source (Source) S2, and a multicast source (Source) S3.

The number of devices in Fig. 1 is only taken as an example, and the number of devices is not limited to this in actual implementation.

Wherein, multicast receivers can be receivers who do not support multicast routing protocols and need to acquire multicast data, such as sites, hosts, or applications.

The gateway device is located in a network that does not support multicast routing protocols, and multicast receivers can access the gateway device.

Each relay device can be connected to at least one multicast source, for example, relay device R1 and relay device R2 in Fig. 1 are both connected to multicast source S1, multicast source S2, and multicast source S3.

The gateway device can establish an AMT tunnel with one relay device in the manner of anycast, and then receive, through the AMT tunnel, multicast data from the multicast source sent by the relay device.

In Fig. 1, for example, an AMT tunnel is established between the gateway device and relay device R1. After receiving multicast data from any multicast source, relay device R1 can forward the multicast data to the gateway device through the AMT tunnel, and then the gateway device can forward the multicast data to the multicast receiver.

The process of establishing an AMT tunnel between a gateway device and a relay device is introduced below.

As shown in Fig. 2, the process of establishing an AMT tunnel between a gateway device and a relay device includes the following operations:
S201: the gateway device sends a Relay Discovery packet (Relay Discovery) to the relay device.

Wherein, relay devices that support the AMT protocol will advertise routes with the same IP address prefix. After learning these routes, gateway devices can generate an anycast address based on the IP address prefix. As an example, the anycast address includes the IP address prefix, and all other bits are set to 0.

When the gateway device sends a Relay Discovery packet (Relay Discovery) based on the anycast address, it will forward the Relay Discovery packet to a relay device, at the nearest topology location, which has advertised the above IP address prefix, according to the anycast routing table.

In one example, the Relay Discovery packet includes a nonce.

S202: after receiving the Relay Discovery packet, the relay device sends a Relay Advertisement packet (Relay Advertisement) to the gateway device.

After receiving the Relay Discovery packet, the relay device can acquire a nonce from the Relay Discovery packet. Moreover, the Relay Advertisement packet sent by the relay device includes the nonce and the unicast Internet Protocol (IP) address of the relay device.

After receiving the Relay Advertisement packet, the gateway device verifies whether the nonce in the Relay Advertisement packet is the same as the nonce sent by the gateway device. If same, the gateway device can use the unicast IP address in the Relay Advertisement packet when communicated with the relay device using the AMT protocol in the future.

Wherein, the above S201-S202 is the relay device discovery stage. Through the above processes, the gateway device can determine the relay device that can establish an AMT tunnel with itself.

S203: the gateway device sends a Request packet (Request) to the relay device. Correspondingly, the relay device receives the Request packet.

Wherein, the Request packet contains a request nonce and a query identifier, to indicate whether the relay device should return a packet to the gateway device, wherein the packet comprises a general query message of the Internet Group Management Protocol version 3 (IGMPv3) or the Multicast Listener Discovery version 2 (MLDv2).

For example, the value of the query identifier can be 1 or 0. When the value of the query identifier is 1, it is to indicate that the relay device should send a packet containing IGMPv3 general query messages or MLDv2 general query messages to the gateway device. When the value of the query identifier is 0, it is to indicate that the relay device does not need to send a packet containing IGMPv3 general query messages or MLDv2 general query messages to the gateway device.

S204: the relay device sends a Membership Query packet (Membership Query) to the gateway device. Correspondingly, the gateway device receives the Membership Query packet.

After receiving the Request packet, the relay device can extract information such as the source IP address, source User Datagram Protocol (UDP) port, request nonce, and private key from the request information, and then calculate the hash digest of the extracted information to acquire the message authentication code.

Furthermore, the relay device can return a Membership Query packet to the gateway device, wherein the Membership Query packet includes the above request nonce, message authentication code, and IGMPv3 general query message or MLDv2 general query message.

S205: the gateway device sends a Membership Update packet (Membership Update) to the relay device.

After receiving the Membership Query packet, the gateway device can verify whether the request nonce in the Membership Query packet is the same as the request nonce included in the Request packet sent by the gateway device.

If it is the same, the gateway device can start a periodic query keep-alive timer (Query Timer). Whenever the periodic query keep-alive timer expires, the gateway device will be triggered to send new request information to the relay device.

At the same time, the gateway device saves the request nonce and the message authentication code, and acquires the IGMPv3 general query message or MLDv2 general query message in the Membership Query packet. The IGMP protocol module in the gateway device processes the IGMPv3 general query message, or the MLD protocol module processes the MLDv2 general query message.

When the gateway device receives a multicast join request sent by the multicast receiver, it can send a Membership Update packet to the relay device.

Wherein, the Membership Update packet comprises a request nonce, a message verification code, and an IGMPv3 report message or MLDv2 report message.

It can be understood that in the case where the gateway device periodically sends request information to the relay device based on the periodic query keep-alive timer, the nonce carried in each Membership Update packet sent by the gateway device is the request nonce in the last Membership Query packet received by the gateway device, and the message verification code carried is the message authentication code in the last Membership Query packet received by the gateway device.

S206: the relay device sends Multicast Data packet (Multicast Data) to the gateway device.

After receiving the Membership Update packet, the relay device calculates the message verification code based on information such as the source IP address, the source UDP port, the request nonce, and the private key of the Membership Update packet. If the calculated message verification code is the same as the message verification code in the Membership Update packet, the relay device receives and processes the Membership Update packet, so that an AMT tunnel is successfully established between the gateway device and the relay device. If the calculated message verification code is different from the message verification code in the Membership Update packet, the relay device ignores the Membership Update packet.

After establishing the AMT tunnel between the gateway device and the relay device, if the relay device receives multicast data from a multicast source and determines that the gateway device belongs to the multicast group corresponding to the multicast source, that is, the gateway device is interested in the multicast data of the multicast source, then the relay device can encapsulate the multicast data into a Multicast Data packet, and then send the Multicast Data packet to the gateway device based on the AMT tunnel.

After receiving the Multicast Data packet, the gateway device extracts the multicast data from the Multicast Data packet and sends the multicast data to the multicast receiver.

After the AMT tunnel is established between the gateway device and the relay device, when the forwarding burden of the relay device is heavy and the forwarding resources of the relay device are not completely exhausted, the gateway device still acquires multicast data streams through the relay device, which will lead to lower forwarding efficiency of multicast data streams.

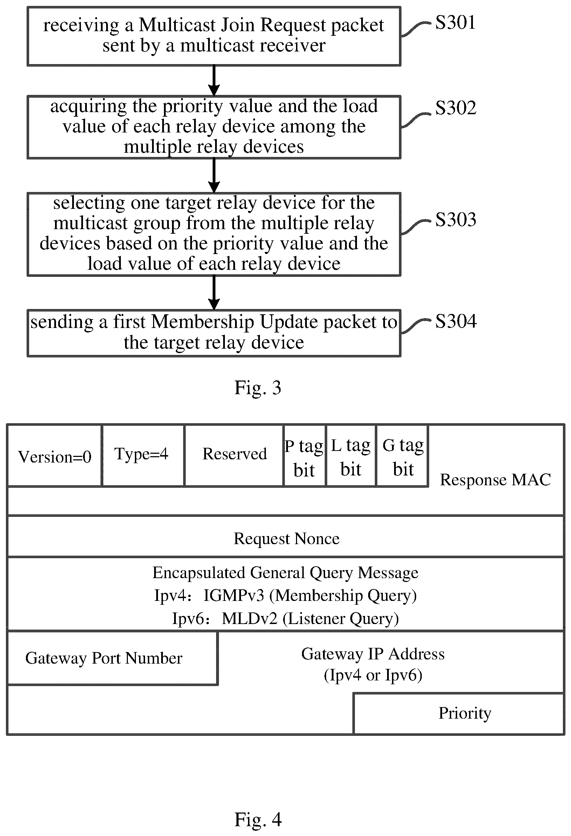

In order to solve the above problem, an example of the present disclosure provides a method for load balancing in multicast tunneling, which is applied to a gateway device that has established AMT tunnels with multiple relay devices. As shown in Fig. 3, the method comprises:

S301: receiving a Multicast Join Request packet sent by a multicast receiver.

Wherein, the Multicast Join Request packet includes information about a multicast group.

The information about a multicast group can be represented as (S, G) or (*, G), where S is the address of a multicast source, G is the address of the multicast group, and "*" represents an unrestricted multicast source.

S302: acquiring the priority value and the load value of each relay device among the multiple relay devices.

Wherein, the priority value is to represent the multicast service quality of the relay device. The higher the multicast service quality of the relay device, the higher the priority value of the relay device; the lower the multicast service quality of the relay device, the lower the priority value of the relay device.

The load value is to represent the load situation of the relay device. As an example, the load value can be the number of multicast groups for which the relay device is responsible. The more multicast groups for which the relay device is responsible, the greater the load value.

S303: selecting one target relay device for the multicast group from the multiple relay devices based on the priority value and the load value of each relay device.

The gateway device can select one target relay device for the multicast group based on the principle of load sharing, with comprehensive considerations of the priority value and the load value of each relay device.

S304: sending a first Membership Update packet to the target relay device.

Wherein, the first Membership Update packet includes the information about the multicast group, so that the target relay device forwards the multicast data stream of the multicast group to the multicast receiver.

After receiving the first Membership Update packet, the target relay device can request replication of the multicast data stream of the multicast group from the upstream multicast source, and forward the multicast data stream of the multicast group to the multicast receiver through the gateway device.

Using the above technical solution, the gateway device can establish AMT tunnels with multiple relay devices. After receiving the Multicast Join Request packet sent by the multicast receiver, one target relay device can be selected based on the priority value and the load value of each relay device for the multicast group that the multicast receiver requests to join, and then the target relay device forwards the multicast data stream of the multicast group for the multicast receiver. Due to the comprehensive consideration of priority values and load values when selecting the target relay device, it enables each relay device to share and forward multicast data streams from multiple multicast groups in a load sharing manner, fully utilizing the device resources of multiple relay devices, and improving the forwarding efficiency of multicast data streams.

In the example of the present disclosure, the gateway device is configured with an anycast address for each relay device included in a relay device group. Before executing the process in Fig. 3, the gateway device needs to establish AMT tunnels with the relay devices in the relay device group.

The process of establishing the AMT tunnels between the gateway device and the multiple relay devices includes:

Operation 1: after the gateway device goes online, sending a Relay Discovery packet to each relay device included in the relay device group respectively, wherein each Relay Discovery packet contains a different anycast address.

In the example of the present disclosure, a specified number of relay addresses can be configured in advance for each relay device in the relay device group. Each relay address has a different IP address prefix, and the forwarding paths between the gateway device and the specified number of relay addresses are different. Wherein, the specified number is the number of relay devices included in the relay device group.

Furthermore, each relay device will advertise a specified number of routes with different IP address prefixes, and the gateway device can learn the routes advertised by the relay devices.

In one example, the gateway device can create one pseudo interface for each relay device, configure a Relay Discovery Address Prefix for each pseudo interface, and a Relay Discovery Address with that Relay Discovery Address Prefix.

For example, assuming that the specified number is 2, two pseudo interfaces can be created. The Relay Discovery Address Prefix configured for pseudo interface 1 is one of the IP address prefixes advertised by the relay device, and the Relay Discovery Address Prefix configured for pseudo interface 2 is another IP address prefix advertised by the relay device.

In another example, the gateway device can create one pseudo interface on which a specified number of Relay Discovery Address Prefixes and a specified number of Relay Discovery Addresses can be configured simultaneously.

It can be understood that the above relay discovery address is an anycast address. Taking two relay devices in the relay device group as an example, assuming that the gateway device is configured with two relay discovery addresses, namely anycast address 1 and anycast address 2, the destination address of one Relay Discovery packet sent is anycast address 1. The Relay Discovery packet can be routed to the relay device closest to the gateway device according to anycast address 1. Similarly, the destination address of another Relay Discovery packet sent by the gateway device is anycast address 2, and the Relay Discovery packet is routed to the relay device closest to the gateway device according to anycast address 2. Due to the different topology paths between the gateway device and anycast address 1 and between the gateway device and anycast address 2, the two Relay Discovery packets sent by the gateway device will be sent to two different relay devices.

Operation 2: within a first preset period, receiving Relay Advertisement packets sent by a first number of relay devices, wherein the Relay Advertisement packets include the priority values of the relay devices.

In one example, the gateway device can start an advertisement waiting timer (Advertisement Timer) after sending the Relay Discovery packet mentioned above, and the advertisement waiting timer expires when the first preset period mentioned above is reached. In this way, the timer expiration mechanism can be used to determine whether the first preset period has been reached.

The first number is the number of relay devices corresponding to the Relay Advertisement packets received by the gateway device within the first preset period after sending the Relay Discovery packet to each relay device included in the relay device group respectively.

The first number is less than or equal to the number of relay devices included in the relay device group.

Operation 3: establishing AMT tunnels with the first number of relay devices respectively and recording the priority values of the first number of relay devices.

After receiving the Relay Advertisement packets sent by the first number of relay devices, the gateway device can record the priority value of each relay device in the first number of relay devices.

Operation 4: recording the priority values of the second number of relay devices as 0. Wherein, the second number of relay devices are relay devices in the relay device group which do not send a Relay Advertisement packet within the first preset period. The sum of the first number and the second number is the number of relay devices included in the relay device group.

If the gateway device does not receive the Relay Advertisement packet sent by any relay device in the relay device group within the first preset period, it can resend a Relay Discovery packet to the relay device according to the AMT protocol. And the priority value of the relay device is temporarily recorded as 0, which indicates that the relay device does not participate in load sharing at present.

If the gateway device receives the Relay Advertisement packet sent by the relay device within the first period after resending the Relay Discovery packet, it can acquire the priority value carried by the Relay Advertisement packet and record the priority value of the relay device, and establish an AMT tunnel with the relay device, allowing the relay device to participate in load sharing subsequently.

By using this method, gateway devices can simultaneously establish AMT tunnels with multiple relay devices in the relay device group, and can record the priority values of the multiple relay devices, so that different multicast streams can be distributed among the multiple relay devices in a load sharing manner according to the priority value and the load value of each relay device, thereby fully utilizing the network resources of relay devices and improving multicast forwarding efficiency.

In some examples of the present disclosure, the priority value may also change due to the change in the multicast service quality of the relay device. In order to timely acquire the changed priority values of the relay devices, AMT tunnels are established between the network device and the first number of relay devices, and the priority values of the first number of relay devices are recorded. After that, the gateway device can also perform operations A-C.

Operation A: sending Request packets to the first number of relay devices every second preset period.

During the process of establishing an AMT tunnel with each relay device, the gateway device will send a Request packet to the relay device. After receiving the Membership Query packet sent by a main relay device as a reply and verifying that the request nonce carried by the Membership Query packet is correct, the gateway device can start a periodic query keep-alive timer (Query Timer). The periodic query keep-alive timer expires when the second preset period is reached.

Furthermore, whenever the query keep-alive timer expires, the gateway device sends a new Request packet to the main relay device.

The Request packet is a Request packet (Request) in the AMT protocol, and the Membership Query packet is a Membership Query packet (Membership Query) in the AMT protocol.

Operation B: receiving the Membership Query packets sent by the first number of relay devices, wherein the Membership Query packets include the priority values of the relay devices.

After receiving a Request packet, the relay device can acquire its latest priority value and encapsulate it in the Membership Query packet.

It can be understood that each time the gateway device sends a Request packet to the relay device, it can receive the Membership Query packet sent by the relay device as a reply, so that the gateway device can periodically acquire the priority value of each relay device.

Operation C: updating the recorded priority values of the first number of relay devices based on the priority values included in the Membership Query packets.

For each relay device in the first number of relay devices, after receiving a Membership Query packet from the relay device, the priority value of the relay device can be updated with the priority value carried by the Membership Query packet.

It should be noted that in the above example, for relay devices that do not reply to the Relay Advertisement packet within the first preset period, if an AMT tunnel can be successfully established with the relay device in the future, the recorded priority value of the relay device can also be updated according to operations A to C.

Using the example of the present disclosure, the gateway device can utilize the keep-alive mechanism between the gateway device and the relay device to periodically acquire the priority value of the relay device, that is, load sharing can be carried out based on the accurate multicast service quality of each relay device, which can improve the multicast service quality.

**In** an example of the present disclosure, the priority value of a relay device can be determined based on the health parameters of the relay device, which include but are not limited to the following parameters:

the number of accessible multicast sources;

network quality with the multicast sources;

the failure ratios of transmission paths with the multicast sources;

the quality of the routing links with the multicast sources.

Wherein, the network quality can include transmission delay, jitter, packet loss rate, etc. between relay devices and multicast sources.

Relay devices can detect the failure ratios of transmission paths with the multicast sources through a detection mechanism, such as the point 2 multiple point Bidirectional Forwarding Detection (P2MP BFD) mechanism.

Each health parameter of the relay device corresponds to one preset weight value and threshold, and the priority value of the relay device is the sum of the weight value of each health parameter. Each time after health parameters are acquired, if a certain health parameter is less than the threshold for the health parameter, the priority value will be reduced by the weight value for the health parameter. After the health parameter is again greater than or equal to the threshold for the health parameter, the priority parameter is increased by the weight value for the health parameter.

The relay device can regularly refresh its own priority value.

In one example, the relay device can calculate its own priority value based on its own health parameters.

In another example, the network controller can centrally monitor the health parameters of each relay device, calculate and then issue the priority value for each relay device.

In some examples of the present disclosure, selecting one target relay device for the multicast group from the multiple relay devices based on the priority value and the load value of each relay device (the above S303) can be specifically implemented by:

acquiring the shared weight value of each relay device, select the shared weight values that exceed a preset threshold from multiple shared weight values, and select a relay device with a lowest load value as the target relay device from the relay devices corresponding to the selected shared weight values.

Wherein, the gateway device can acquire the shared weight value of each relay device through one of the following two methods:

Method 1: determine the corresponding shared weight value for the priority value of each relay device based on preset mapping relationships between priority values and shared weight values.

Wherein, the higher the priority value, the greater the shared weight value. The preset mapping relationships mentioned above can be configured in advance based on experience.

Method 2: for each relay device, determining the shared weight value of the relay device as the ratio between the priority value of the relay device and the sum of the priority values of the multiple relay devices.

If the number of relay devices participating in load sharing is N, and the priority values of N relay devices are priority-1 to priority-N, then the shared weight value of relay device n for load sharing is:

$$\text{priority-n}/(\text{priority-1}+\text{priority-2}+...+\text{priority-N}) * 100.$$

Wherein, the value range of n is from 1 to N.

By using the above formula, the shared weight value of each relay device can be calculated respectively. Then, the shared weight values that exceed the preset threshold can be selected therefrom. The preset threshold can be set based on experience.

Assuming that the shared weight values of relay device 1, relay device 3, and relay device 5 among N relay devices are greater than the preset threshold, the load values of relay device 1, relay device 3, and relay device 5 can be compared.

Assuming that load value of relay device 1 is the smallest, relay device 1 can be used as the target relay device.

Wherein, the load value is the number of multicast groups for which the relay device is responsible. The gateway device can maintain the number of multicast groups for which each relay device is responsible. After selecting a target relay device for each multicast group, the load value of this target relay device can be increased by 1.

In one example, the method of selecting the target relay device in the example of the present disclosure is not limited to this. It can also be made based on other load sharing methods, based on the priority value and the load value of each relay device, to select one target relay device for the multicast group from multiple relay devices, which is not specifically limited in the examples of the present disclosure.

For example, it is possible to sequentially determine whether the shared load value of the relay device corresponding to each shared weight value is less than a preset load threshold, in the order of the shared weight value from highest to lowest. The first relay device with a shared load value less than the preset load threshold can be selected as the target relay device.

Specifically, the maximum shared weight value can be selected first. If the load value of the relay device corresponding to this maximum shared weight value is less than the preset load value threshold, the relay device will be selected as the target relay device. If the load value of the relay device is greater than or equal to the preset load value threshold, select the second largest shared weight value. If the load value of the relay device corresponding to the second largest shared weight value is less than the preset load threshold, this relay device will be selected as the target relay device. Otherwise, continue to select the next shared weight value and so on until the target relay device is selected.

By adopting the above technical solution, the gateway device can select the target relay device for the multicast group with comprehensive considerations of the shared weight values and load values of the relay devices. The selected target relay device can provide better multicast service quality, avoid selecting relay devices with heavy load or poor multicast service quality, fully utilize the resources of the relay devices, and improve multicast forwarding efficiency.

In some examples of the present disclosure, after the gateway device selects a target relay device for the multicast group, unless the gateway device receives a request from the multicast receiver to leave the multicast group, the multicast data stream of the multicast group will always be forwarded by the target relay device. Even if the priority value or load value of the target relay device changes, there is no need to reselect a target relay device for the multicast group.

However, if the gateway device senses through the keep-alive mechanism that the target relay device is unreachable, that is, if the target relay device fails, after sending the first Membership Update packet to the target relay device in S304, the method also comprises:

if the target relay device fails, acquiring the priority value of each relay device among multiple relay devices other than the target relay device;

from the multiple relay devices other than the target relay device, reselecting a new target relay device for the multicast group based on the priority value and the load value acquired for each relay device;

sending a second Membership Update packet to the reselected target relay device, wherein the second Membership Update packet includes the information about the multicast group, so that the reselected target relay device forwards the multicast data stream of the multicast group to the multicast receiver.

Wherein, the method of reselecting the target relay device is the same as the method of selecting the target relay device introduced in the above example. For each multicast group for which a failed target relay device is responsible, it is necessary to reselect a target relay device from the relay device group.

In this way, after the target relay device fails, the target relay device can be reselected in time for the multicast group for which the failed target relay device is responsible, which can improve the reliability of the AMT tunnel and avoid multicast service interruption.

Based on the introduction of the above examples, priority values have been added to both the Membership Query packet and the Relay Advertisement packet in the examples of the present disclosure. The packet formats of the Membership Query packet and the Relay Advertisement packet are introduced below.

In one example of the present disclosure, a Membership Query packet from a relay device includes a first tag bit field and a priority field. When the value of the first tag bit field is the first value, it indicates that the priority value of the relay device is carried in the priority field.

In addition, the Membership Query packet also includes a second tag bit field.

If the value of the second tag bit field is the first value, it indicates that the priority field is located after and adjacent to a gateway address field.

If the value of the second tag bit field is the second value, it indicates that the priority field is located after and adjacent to encapsulation information of a general query message.

For example, the first value can be 1, and the second value can be 0.

As an example, as shown in Fig. 4, it is a schematic structural diagram of the Membership Query packet when the value of the second tag bit field is the first value.

The Membership Query packet includes the following fields: Version, Type, Reserved, P tag bit, L tag bit, G tag bit, Response Media Access Control (MAC) address, Request Nonce, Encapsulated General Query packet, gateway device port number (Gateway Port Number), gateway address (Gateway IP Address) and Priority.

Wherein, the value of the version field (Version) is 0, and the value of the type field (Type) is 4. If the communication between the gateway device and the relay device is based on the Ipv4 protocol, the general query message is a Membership Query packet (Membership Query) based on the IGMPv3 protocol. If the communication between the gateway device and the relay device is based on the Ipv6 protocol, the general query message is a Listener Query message (Listener Query) based on the MLDv2 protocol. The IP address of the gateway device is Ipv4 address or Ipv6 address.

Wherein, the first tag bit field is the P tag bit field, and the second tag bit field is the G tag bit field. When the P and G tag bit fields are both 1, it indicates that the priority field is located after the Gateway IP Address field in Fig. 4.

When the value of the P tag bit field is 1 and the value of the G tag bit field is 0, it indicates that the Gateway Port Number field and Gateway IP Address field are not included in the Membership Query packet, and the priority field is located after the Encapsulated General Query packet in Fig. 4.

In another example of the present disclosure, the Relay Advertisement packet includes a priority field to carry the priority value of the relay device.

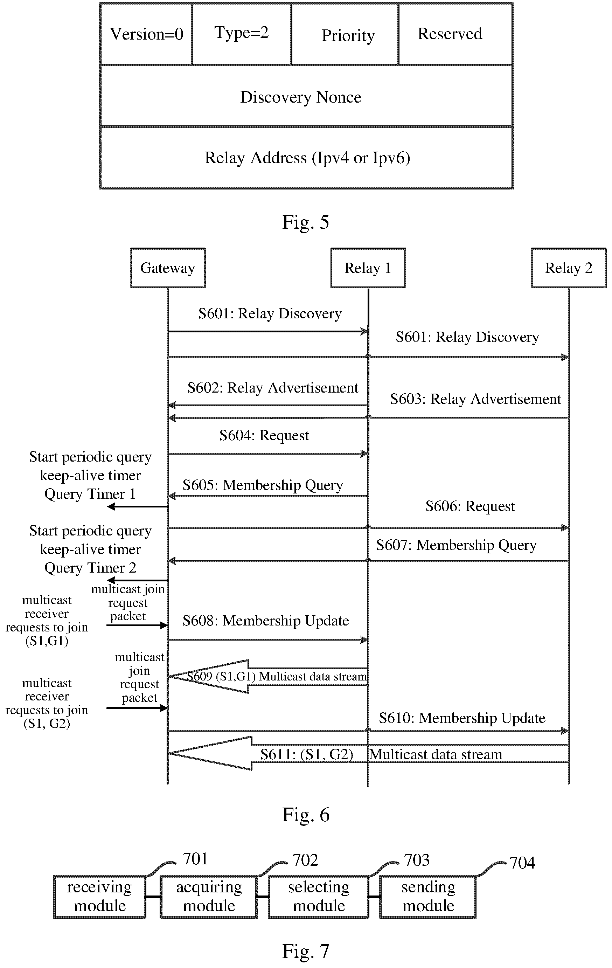

As an example, as shown in Fig. 5, Fig. 5 is a schematic diagram of a Relay Advertisement packet provided in an example of the present disclosure. The Relay Advertisement packet includes the following fields: Version, Type, Priority, Reserved, Discovery Nonce, and Relay Address. Wherein, the value of the Version field is 0, the value of the Type field is 2, and the Relay Address field includes Ipv4 address or Ipv6 address. The priority field is located after and adjacent to the type field.

In the Membership Query packet and Relay Query packet mentioned above, the priority field occupies 8 reserved bits and can be an unsigned integer, with an effective range of 1 to 255. When the value of the priority field is 0, it indicates that the priority field does not carry the priority value of the relay device.

As shown in Fig. 6, taking the relay device group comprising relay device 1 and relay device 2 as an example, Fig. 6 is a schematic flowchart of a method for load balancing in multicast tunneling provided in an example of the present disclosure, which can include S601-S609.

S601: gateway devices send Relay Discovery packets to relay device 1 and relay device 2 respectively. Correspondingly, relay device 1 and relay device 2 receive the Relay Discovery packets sent by the gateway device.

S602: after receiving the Relay Discovery packet, relay device 1 sends a Relay Advertisement packet (Relay Advertisement) to the gateway device. Correspondingly, the gateway device can receive the Relay Advertisement packet.

Wherein, the Relay Advertisement packet includes the priority value Priority-1 of relay device 1.

After S602, S604 is executed.

S603: after receiving the Relay Discovery packet, relay device 2 sends a Relay Advertisement packet (Relay Advertisement) to the gateway device. Correspondingly, the gateway device can receive the Relay Advertisement packet.

After S603, S606 is executed.

Wherein, the Relay Advertisement packet includes the priority value Priority-2 of relay device 2.

S604: the gateway device sends a Request packet (Request) to relay device 1.

Wherein, after receiving the Relay Advertisement packet sent by relay device 1, the gateway device can execute S604.

S605: after receiving the Request packet, relay device 1 sends a Membership Query packet (Membership Query) to the gateway device.

Wherein, the Membership Query packet includes the latest priority value Priority-1 of relay device 1.

After receiving the Membership Query packet sent by relay device 1, the gateway device can initiate a periodic query keep-alive timer (Query Timer) 1 with relay device 1. Whenever the periodic query keep-alive timer 1 expires, it triggers the gateway device to resend the Request packet to relay device 1.

S606: the gateway device sends a Request packet (Request) to relay device 2.

Wherein, after receiving the Relay Advertisement packet sent by relay device 2, the gateway device can execute S606.

S607: after receiving the Request packet, relay device 2 sends a Membership Query packet (Membership Query) to the gateway device.

Wherein, the Membership Query packet includes the latest priority value Priority-2 of relay device 2.

After receiving the Membership Query packet sent by relay device 2, the gateway device can initiate a periodic query keep-alive timer (Query Timer) 2 with relay device 2. Whenever the periodic query keep-alive timer 2 expires, it triggers the gateway device to resend the Request packet to relay device 2.

Subsequently, if the gateway device receives a Multicast Join Request packet sent by multicast receiver 1, which requests to join the multicast group (S1, G1), then the gateway device selects a target relay device for the multicast group (S1, G1) based on the priority values and load values of relay device 1 and relay device 2. Assuming the selected target relay device is relay device 1, continue to execute S608.

S608: the gateway device sends a Membership Update packet (Membership Update) to relay device 1. Correspondingly, relay device 1 receives the Membership Update packet.

Wherein, the Membership Update packet includes information about the multicast group (S1, G1).

S609: relay device 1 sends (S1, G1) multicast data streams to the gateway device. Correspondingly, the gateway device receives (S1, G1) multicast data streams sent by relay device 1.

Moreover, the gateway device can forward (S1, G1) multicast data streams to multicast receiver 1.

After S607, if the gateway device receives a Multicast Join Request packet from multicast receiver 2, which requests to join the multicast group (S1, G2), the gateway device selects a target relay device for the multicast group (S1, G2) based on the priority values and load values of relay device 1 and relay device 2. Assuming the selected target relay device is relay device 2, continue to execute S610.

S610: the gateway device sends a Membership Update packet (Membership Update) to relay device 2. Correspondingly, relay device 2 receives the Membership Update packet.

The Membership Update packet includes information about the multicast group (S1, G2).

S609: relay device 2 sends (S1, G2) multicast data streams to the gateway device. Correspondingly, the gateway device receives (S1, G2) multicast data streams sent by relay device 2.

Moreover, the gateway device can forward (S1, G2) multicast data streams to multicast receiver 2.

Using this method, the gateway device can simultaneously establish AMT tunnels with multiple relay devices. After receiving a Multicast Join Request packet, the gateway device can select a relay device for the multicast group in a load sharing manner based on the priority values and the load values of multiple relay devices. The selected relay device forwards the multicast data streams of the multicast group which the multicast join request requests to join, which can improve the efficiency of multicast forwarding.

Based on the same concept, an example of the present disclosure provides an apparatus for load balancing in multicast tunneling, which is applied to a gateway device that has established AMT tunnels with multiple relay devices. As shown in Fig. 7, the apparatus comprises:

a receiving module 701, to receive a Multicast Join Request packet sent by a multicast receiver, wherein the Multicast Join Request packet includes information about a multicast group;

an acquiring module 702, to acquire a priority value and a load value of each relay device among the multiple relay devices, wherein the priority value is to represent multicast service quality of the relay device;

a selecting module 703, to select one target relay device for the multicast group from the multiple relay devices based on the priority value and the load value of each relay device.

a sending module 704, to send a first Membership Update packet to the target relay device, wherein the first Membership Update packet includes the information about the multicast group, so that the target relay device forwards a multicast data stream of the multicast group to the multicast receiver.

In one example, the gateway device is configured with an anycast address for each relay device included in a relay device group, and a process of establishing the AMT tunnels between the gateway device and the multiple relay devices comprises:

after the gateway device goes online, sending a Relay Discovery packet to each relay device included in the relay device group respectively, wherein each Relay Discovery packet contains a different anycast address;

within a first preset period, receiving Relay Advertisement packets sent by a first number of relay devices, wherein the Relay Advertisement packets include priority values of the relay devices;

establishing AMT tunnels with the first number of relay devices respectively and record the priority values of the first number of relay devices;

recording priority values of a second number of relay devices as 0, wherein the second number of relay devices are relay devices in the relay device group which do not send a Relay Advertisement packet within the first preset period, and a sum of the first number and the second number is the number of relay devices included in the relay device group.

In one example, after recording the priority values of the first number of relay devices, the apparatus further comprises an updating module:

the sending module 704 is further to send Request packets to the first number of relay devices every second preset period;

the receiving module 701 is further to receive Membership Query packets sent by the first number of relay devices, wherein the Membership Query packets include the priority values of the relay devices;

the updating module is to update the recorded priority values of the first number of relay devices based on the priority values included in the Membership Query packets.

In one example, selecting module 703 is specifically to:

acquire a shared weight value of each relay device;

select shared weight values that exceed a preset threshold from multiple shared weight values;

select a relay device with a lowest load value as the target relay device from relay devices corresponding to the selected shared weight values.

In one example, selecting module 703 is specifically to:

determine a shared weight value corresponding to the priority value of each relay device based on preset mapping relationships between priority values and shared weight values; or,

for each relay device, determine the shared weight value of the relay device as a ratio between the priority value of the relay device and a sum of the priority values of the multiple relay devices.

In one example, the acquiring module 702 is further to: if the target relay device fails, acquire the priority value of each relay device among the multiple relay devices other than the target relay device;

the selecting module 703 is further to: from the multiple relay devices other than the target relay device, reselect a new target relay device for the multicast group based on the priority value and the load value acquired for each relay device;

the sending module 704 is further to: send a second Membership Update packet to the reselected target relay device, wherein the second Membership Update packet includes the information about the multicast group, so that the reselected target relay device forwards the multicast data stream of the multicast group to the multicast receiver.

In one example, a Relay Advertisement packet from a relay device includes a priority field, to carry the priority value of the relay device.

In one example, a Membership Query packet from a relay device includes a first tag bit field and a priority field, when a value of the first tag bit field is a first value, it indicates that the priority value of the relay device is carried in the priority field.

In one example, the Membership Query packet further includes a second tag bit field;

if a value of the second tag bit field is the first value, it indicates that the priority field is located after and adjacent to a gateway address field;

if the value of the second tag bit field is a second value, it indicates that the priority field is located after and adjacent to encapsulation information of a general query message.

In one example, the priority field occupies 8 reserved bits, when a value of the priority field is 0, it indicates that the priority field does not carry a priority value.

In one example, the priority value of a relay device is determined based on health parameters of the relay device, which includes any one or more of:

the number of accessible multicast sources;

network quality with the multicast sources;

failure ratios of transmission paths with the multicast sources;

quality of routing links with the multicast sources.

In one example, the load value of a relay device is the number of multicast groups for which the relay device is responsible.

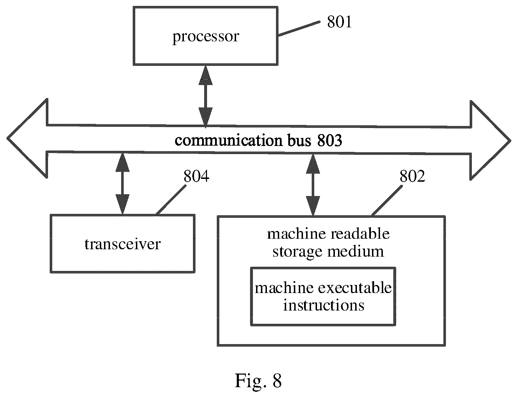

Based on the same concept, an example of the present disclosure provides a gateway device, as shown in Fig. 8. The gateway device has established AMT tunnels with multiple relay devices, and comprises:

a processor 801;

a transceiver 804;

a machine readable storage medium 802, which stores machine executable instructions that can be executed by the processor to cause the processor 801 to:

receive a Multicast Join Request packet sent by a multicast receiver through the transceiver 804, wherein the Multicast Join Request packet includes information about a multicast group;

acquire a priority value and a load value of each relay device among the multiple relay devices, wherein the priority value is to represent multicast service quality of the relay device;

select one target relay device for the multicast group from the multiple relay devices based on the priority value and the load value of each relay device;

send a first Membership Update packet to the target relay device through the transceiver 804, wherein the first Membership Update packet includes the information about the multicast group, so that the target relay device forwards a multicast data stream of the multicast group to the multicast receiver.

In one example, the gateway device is configured with an anycast address for each relay device included in a relay device group, and the machine executable instructions further cause the processor 801 to:

after the gateway device goes online, send a Relay Discovery packet to each relay device included in the relay device group respectively through the transceiver 804, wherein each Relay Discovery packet contains a different anycast address;

within a first preset period, receive Relay Advertisement packets sent by a first number of relay devices through the transceiver 804, wherein the Relay Advertisement packets include priority values of the relay devices;

establish AMT tunnels with the first number of relay devices respectively and record the priority values of the first number of relay devices;

record priority values of a second number of relay devices as 0, wherein the second number of relay devices are relay devices in the relay device group which do not send a Relay Advertisement packet within the first preset period, and a sum of the first number and the second number is the number of relay devices included in the relay device group.

In one example, machine executable instructions further cause the processor 801 to:

send Request packets to the first number of relay devices through the transceiver 804 every second preset period;

receive Membership Query packets sent by the first number of relay devices through the transceiver 804, wherein the Membership Query packets include the priority values of the relay devices;

update the recorded priority values of the first number of relay devices based on the priority values included in the Membership Query packets.

In one example, the machine executable instructions cause the processor 801 to:

acquire a shared weight value of each relay device;

select shared weight values that exceed a preset threshold from multiple shared weight values;

select a relay device with a lowest load value as the target relay device from relay devices corresponding to the selected shared weight values.

In one example, the machine executable instructions cause the processor 801 to perform the following operations, comprising:

determining a shared weight value corresponding to the priority value of each relay device based on preset mapping relationships between priority values and shared weight values; or,

for each relay device, determining the shared weight value of the relay device as a ratio between the priority value of the relay device and a sum of the priority values of the multiple relay devices.

In one example, the machine executable instructions further cause the processor 801 to:

if the target relay device fails, acquire the priority value of each relay device among the multiple relay devices other than the target relay device;

from the multiple relay devices other than the target relay device, reselect a new target relay device for the multicast group based on the priority value and the load value acquired for each relay device;

send a second Membership Update packet to the reselected target relay device, wherein the second Membership Update packet includes the information about the multicast group, so that the reselected target relay device forwards the multicast data stream of the multicast group to the multicast receiver 804.

In one example, a Relay Advertisement packet from a relay device includes a priority field, to carry the priority value of the relay device.

In one example, a Membership Query packet from a relay device includes a first tag bit field and a priority field, when a value of the first tag bit field is a first value, it indicates that the priority value of the relay device is carried in the priority field.

In one example, the Membership Query packet further includes a second tag bit field;

if a value of the second tag bit field is the first value, it indicates that the priority field is located after and adjacent to a gateway address field;

if the value of the second tag bit field is a second value, it indicates that the priority field is located after and adjacent to encapsulation information of a general query message.

In one example, the priority field occupies 8 reserved bits, when a value of the priority field is 0, it indicates that the priority field does not carry a priority value.

In one example, the priority value of a relay device is determined based on health parameters of the relay device, which includes any one or more of:

the number of accessible multicast sources;

network quality with the multicast sources;

failure ratios of transmission paths with the multicast sources;

quality of routing links with the multicast sources.

In one example, the load value of a relay device is the number of multicast groups for which the relay device is responsible.

In Fig. 8, communication bus 803 can also be included. The processor 801, machine readable storage medium 802, and transceiver 804 are communicated with each other through the communication bus 803, which can be a Peripheral Component Interconnect (PCI) bus or an Extended Industry Standard Architecture (EISA) bus. The communication bus can be divided into an address bus, a data bus, a control bus, etc.

The transceiver 804 can be a wireless communication module, and under the control of the processor 801, interacts with other devices for data.

Machine readable storage medium 802 may include an Random Access Memory (RAM) or a Non-Volatile Memory (NVM), such as at least one disk storage. In addition, the machine readable storage medium can also be at least one storage device located away from the aforementioned processor.

The processor 801 can be a general-purpose processor, comprises a Central Processing Unit (CPU), a Network Processor (NP), etc. It can also be a Digital Signal Processor (DSP), an Application Specific Integrated Circuit (ASIC), a Field-Programmable Gate Array (FPGA) or other programmable logic devices, discrete gates or transistor logic devices, or discrete hardware components.

Based on the same disclosure concept, according to the method for load balancing in multicast tunneling provided in the above example of the present disclosure, an example of the present disclosure also provides a machine readable storage medium, which stores machine executable instructions that can be executed by the processor to cause the processor to implement the method for load balancing in multicast tunneling mentioned above.

In another example provided in the present disclosure, a computer program product containing instructions is further provided, which, when running on a computer, causes the computer to execute the operations of the method for load balancing in multicast tunneling in the above example.

It should be noted that in this article, relational terms such as "first" and "second" are only to distinguish one entity or operation from another entity or operation, and do not necessarily require or imply any actual relationship or order between these entities or operations. Moreover, the terms "include", "contain", or any other variation thereof are intended to encompass non-exclusive inclusion, such that a process, method, item, or device that includes a series of elements not only includes those elements, but also other elements that are not explicitly listed, or also include elements inherent in such a process, method, item, or device. Without further limitations, the elements limited by the statement "comprising alan..." do not exclude the existence of other identical elements in the process, method, item, or device that includes the elements.

The above are only preferred examples of the present disclosure and are not intended to limit the present disclosure. Any modifications, equivalent substitutions, improvements, etc. made within the spirit and principle of the present disclosure should be included within the protection scope of the present disclosure.

**Claims**

1. A method for load balancing in multicast tunneling, wherein the method is applied to a gateway device that has established AMT tunnels with multiple relay devices, and the method comprises:

receiving a Multicast Join Request packet sent by a multicast receiver, wherein the Multicast Join Request packet includes information about a multicast group;

acquiring a priority value and a load value of each relay device among the multiple relay devices, wherein the priority value is to represent multicast service quality of the relay device;

selecting one target relay device for the multicast group from the multiple relay devices based on the priority value and the load value of each relay device;

sending a first Membership Update packet to the target relay device, wherein the first Membership Update packet includes the information about the multicast group, so that the target relay device forwards a multicast data stream of the multicast group to the multicast receiver.

2. The method according to claim 1, wherein the gateway device is configured with an anycast address for each relay device included in a relay device group, and a process of establishing the AMT tunnels between the gateway device and the multiple relay devices comprises:

after the gateway device goes online, sending a Relay Discovery packet to each relay device included in the relay device group respectively, wherein each Relay Discovery packet contains a different anycast address;

within a first preset period, receiving Relay Advertisement packets sent by a first number of relay devices, wherein the Relay Advertisement packets include priority values of the relay devices;

establishing AMT tunnels with the first number of relay devices respectively and recording the priority values of the first number of relay devices;

recording priority values of a second number of relay devices as 0, wherein the second number of relay devices are relay devices in the relay device group which do not send a Relay Advertisement packet within the first preset period, and a sum of the first number and the second number is the number of relay devices included in the relay device group.

3. The method according to claim 2, wherein after recording the priority values of the first number of relay devices, the method further comprises:

sending Request packets to the first number of relay devices every second preset period;

receiving Membership Query packets sent by the first number of relay devices, wherein the Membership Query packets include the priority values of the relay devices;

updating the recorded priority values of the first number of relay devices based on the priority values included in the Membership Query packets.

4. The method according to claim 1, wherein selecting one target relay device for the multicast group from the multiple relay devices based on the priority value and the load value of each relay device, comprises:

acquiring a shared weight value of each relay device;

selecting shared weight values that exceed a preset threshold from multiple shared weight values;

selecting a relay device with a lowest load value as the target relay device from relay devices corresponding to the selected shared weight values.

5. The method according to claim 4, wherein acquiring the shared weight value of each relay device, comprises:

determining a shared weight value corresponding to the priority value of each relay device based on preset mapping relationships between priority values and shared weight values; or,

for each relay device, determining the shared weight value of the relay device as a ratio between the priority value of the relay device and a sum of the priority values of the multiple relay devices.

6. The method according to claim 1, wherein after sending the first Membership Update packet to the target relay device, the method further comprises:

in response to determining that the target relay device fails, acquiring the priority value of each relay device among the multiple relay devices other than the target relay device;

from the multiple relay devices other than the target relay device, reselecting a new target relay device for the multicast group based on the priority value and the load value acquired for each relay device;

sending a second Membership Update packet to the reselected target relay device, wherein the second Membership Update packet includes the information about the multicast group, so that the reselected target relay device forwards the multicast data stream of the multicast group to the multicast receiver.

7. The method according to claim 2, wherein a Relay Advertisement packet from a relay device includes a priority field, to carry the priority value of the relay device.

8. The method according to claim 3, wherein a Membership Query packet from a relay device includes a first tag bit field and a priority field, when a value of the first tag bit field is a first value, it indicates that the priority value of the relay device is carried in the priority field.

9. The method according to claim 8, wherein the Membership Query packet further includes a second tag bit field;

if a value of the second tag bit field is the first value, it indicates that the priority field is located after and adjacent to a gateway address field;
if the value of the second tag bit field is a second value, it indicates that the priority field is located after and adjacent to encapsulation information of a general query message.

10. The method according to claim 7 or 8, wherein the priority field occupies 8 reserved bits, when a value of the priority field is 0, it indicates that the priority field does not carry a priority value.

11. The method according to claim 1, wherein the priority value of a relay device is determined based on health parameters of the relay device, which includes any one or more of:

the number of accessible multicast sources;
network quality with the multicast sources;
failure ratios of transmission paths with the multicast sources;
quality of routing links with the multicast sources.

12. The method according to claim 1, wherein the load value of a relay device is the number of multicast groups for which the relay device is responsible.

13. An apparatus for load balancing in multicast tunneling, wherein the apparatus is applied to a gateway device that has established AMT tunnels with multiple relay devices, and the apparatus comprises:

a receiving module, to receive a Multicast Join Request packet sent by a multicast receiver, wherein the Multicast Join Request packet includes information about a multicast group;
an acquiring module, to acquire a priority value and a load value of each relay device among the multiple relay devices, wherein the priority value is to represent multicast service quality of the relay device;
a selecting module, to select one target relay device for the multicast group from the multiple relay devices based on the priority value and the load value of each relay device;
a sending module, to send a first Membership Update packet to the target relay device, wherein the first Membership Update packet includes the information about the multicast group, so that the target relay device forwards a multicast data stream of the multicast group to the multicast receiver.

14. The apparatus according to claim 13, wherein the gateway device is configured with an anycast address for each relay device included in a relay device group, and a process of establishing the AMT tunnels between the gateway device and the multiple relay devices comprises:

after the gateway device goes online, sending a Relay Discovery packet to each relay device included in the relay device group respectively, wherein each Relay Discovery packet contains a different anycast address;
within a first preset period, receiving Relay Advertisement packets sent by a first number of relay devices, wherein the Relay Advertisement packets include priority values of the relay devices;
establishing AMT tunnels with the first number of relay devices respectively and record the priority values of the first number of relay devices;
recording priority values of a second number of relay devices as 0, wherein the second number of relay devices are relay devices in the relay device group which do not send a Relay Advertisement packet within the first preset period, and a sum of the first number and the second number is the number of relay devices included in the relay device group.

15. The apparatus according to claim 14, wherein after recording the priority values of the first number of relay devices, the apparatus further comprises an updating module;

the sending module is further to send Request packets to the first number of relay devices every second preset period;

the receiving module is further to receive Membership Query packets sent by the first number of relay devices, wherein the Membership Query packets include the priority values of the relay devices;

the updating module is to update the recorded priority values of the first number of relay devices based on the priority values included in the Membership Query packets.

16. The apparatus according to claim 13, wherein the selecting module is specifically to:

acquire a shared weight value of each relay device;
select shared weight values that exceed a preset threshold from multiple shared weight values;
select a relay device with a lowest load value as the target relay device from relay devices corresponding to the selected shared weight values.

17. The apparatus according to claim 16, wherein the selecting module is specifically to:

determine a shared weight value corresponding to the priority value of each relay device based on preset mapping relationships between priority values and shared weight values; or,
for each relay device, determine the shared weight value of the relay device as a ratio between the priority value of the relay device and a sum of the priority values of the multiple relay devices.

18. The apparatus according to claim 13, wherein,

the acquiring module is further to: in response to determining that the target relay device fails, acquire the priority value of each relay device among the multiple relay devices other than the target relay device;
the selecting module is further to: from the multiple relay devices other than the target relay device, reselect a new target relay device for the multicast group based on the priority value and the load value acquired for each relay device;
the sending module is further to: send a second Membership Update packet to the reselected target relay device, wherein the second Membership Update packet includes the information about the multicast group, so that the reselected target relay device forwards the multicast data stream of the multicast group to the multicast receiver.

19. The apparatus according to claim 14, wherein a Relay Advertisement packet from a relay device includes a priority field, to carry the priority value of the relay device.

20. The apparatus according to claim 15, wherein a Membership Query packet from a relay device includes a first tag bit field and a priority field, when a value of the first tag bit field is a first value, it indicates that the priority value of the relay device is carried in the priority field.

21. The apparatus according to claim 20, wherein the Membership Query packet further includes a second tag bit field;

if a value of the second tag bit field is the first value, it indicates that the priority field is located after and adjacent to a gateway address field;
if the value of the second tag bit field is a second value, it indicates that the priority field is located after and adjacent to encapsulation information of a general query message.

22. The apparatus according to claim 19 or 20, wherein the priority field occupies 8 reserved bits, when a value of the priority field is 0, it indicates that the priority field does not carry a priority value.

23. The apparatus according to claim 13, wherein the priority value of a relay device is determined based on health parameters of the relay device, which includes any one or more of:

the number of accessible multicast sources;
network quality with the multicast sources;
failure ratios of transmission paths with the multicast sources;
quality of routing links with the multicast sources.

24. The apparatus according to claim 13, wherein the load value of a relay device is the number of multicast groups for which the relay device is responsible.

25. A gateway device, which has established AMT tunnels with multiple relay devices and comprises:

a processor;
a transceiver;
a machine readable storage medium, which stores machine executable instructions that can be executed by the processor to cause the processor to:

receive a Multicast Join Request packet sent by a multicast receiver through the transceiver, wherein the Multicast Join Request packet includes information about a multicast group;
acquire a priority value and a load value of each relay device among the multiple relay devices, wherein the priority value is to represent multicast service quality of the relay device;
select one target relay device for the multicast group from the multiple relay devices based on the priority value and the load value of each relay device;
send a first Membership Update packet to the target relay device through the transceiver, wherein the first Membership Update packet includes the information about the multicast group, so that the target relay device forwards a multicast data stream of the multicast group to the multicast receiver.

26. The gateway device according to claim 25, wherein the gateway device is configured with an anycast address for each relay device included in a relay device group, and the machine executable instructions further cause the processor to:

after the gateway device goes online, send a Relay Discovery packet to each relay device included in the relay device group respectively through the transceiver, wherein each Relay Discovery packet contains a different anycast address;
within a first preset period, receive Relay Advertisement packets sent by a first number of relay devices through the transceiver, wherein the Relay Advertisement packets include priority values of the relay devices;
establish AMT tunnels with the first number of relay devices respectively and record the priority values of the first number of relay devices;
record priority values of a second number of relay devices as 0, wherein the second number of relay devices are relay devices in the relay device group which do not send a Relay Advertisement packet within the first preset period, and a sum of the first number and the second number is the number of relay devices included in the relay device group.

27. The gateway device according to claim 26, wherein the machine executable instructions further cause the processor to:

send Request packets to the first number of relay devices through the transceiver every second preset period;
receive Membership Query packets sent by the first number of relay devices through the transceiver, wherein the Membership Query packets include the priority values of the relay devices;
update the recorded priority values of the first number of relay devices based on the priority values included in the Membership Query packets.

28. The gateway device according to claim 25, wherein the machine executable instructions cause the processor to:

acquire a shared weight value of each relay device;
select shared weight values that exceed a preset threshold from multiple shared weight values;
select a relay device with a lowest load value as the target relay device from relay devices corresponding to the selected shared weight values.

29. The gateway device according to claim 28, wherein the machine executable instructions cause the processor to perform the following operations, comprising:

determining a shared weight value corresponding to the priority value of each relay device based on preset mapping relationships between priority values and shared weight values; or,
for each relay device, determining the shared weight value of the relay device as a ratio between the priority value of the relay device and a sum of the priority values of the multiple relay devices.

30. The gateway device according to claim 25, wherein the machine executable instructions further cause the processor to:

in response to determining that the target relay device fails, acquire the priority value of each relay device among the multiple relay devices other than the target relay device;

from the multiple relay devices other than the target relay device, reselect a new target relay device for the multicast group based on the priority value and the load value acquired for each relay device;

send a second Membership Update packet to the reselected target relay device, wherein the second Membership Update packet includes the information about the multicast group, so that the reselected target relay device forwards the multicast data stream of the multicast group to the multicast receiver.

31. The gateway device according to claim 26, wherein a Relay Advertisement packet from a relay device includes a priority field, to carry the priority value of the relay device.

32. The gateway device according to claim 27, wherein a Membership Query packet from a relay device includes a first tag bit field and a priority field, when a value of the first tag bit field is a first value, it indicates that the priority value of the relay device is carried in the priority field.

33. The gateway device according to claim 32, wherein the Membership Query packet further includes a second tag bit field;

if a value of the second tag bit field is the first value, it indicates that the priority field is located after and adjacent to a gateway address field;

if the value of the second tag bit field is a second value, it indicates that the priority field is located after and adjacent to encapsulation information of a general query message.

34. The gateway device according to claim 31 or 32, wherein the priority field occupies 8 reserved bits, when a value of the priority field is 0, it indicates that the priority field does not carry a priority value.

35. The gateway device according to claim 25, wherein the priority value of a relay device is determined based on health parameters of the relay device, which includes any one or more of:

the number of accessible multicast sources;
network quality with the multicast sources;
failure ratios of transmission paths with the multicast sources;
quality of routing links with the multicast sources.

36. The gateway device according to claim 25, wherein the load value of a relay device is the number of multicast groups for which the relay device is responsible.

37. A machine readable storage medium, which stores machine executable instructions that, when called and executed by a processor, cause the processor to implement the method according to any one of claims 1-12.

38. A computer program product, which causes a processor to implement the method according to any one of claims 1-12.

Fig. 1

Fig. 2

receiving a Multicast Join Request packet sent by a multicast receiver — S301

acquiring the priority value and the load value of each relay device among the multiple relay devices — S302

selecting one target relay device for the multicast group from the multiple relay devices based on the priority value and the load value of each relay device — S303

sending a first Membership Update packet to the target relay device — S304

Fig. 3

| Version=0 | Type=4 | Reserved | P tag bit | L tag bit | G tag bit | Response MAC |
|---|---|---|---|---|---|---|
| | | | | | | |
| Request Nonce | | | | | | |
| Encapsulated General Query Message<br>Ipv4: IGMPv3 (Membership Query)<br>Ipv6: MLDv2 (Listener Query) | | | | | | |
| Gateway Port Number | | | Gateway IP Address<br>(Ipv4 or Ipv6) | | | |
| | | | | | Priority | |

Fig. 4

| Version=0 | Type=2 | Priority | Reserved |
|-----------|--------|----------|----------|
| Discovery Nonce | | | |
| Relay Address (Ipv4 or Ipv6) | | | |

Fig. 5

Fig. 6

Fig. 7

processor 801

communication bus 803

transceiver 804

machine readable storage medium 802

machine executable instructions

Fig. 8

# INTERNATIONAL SEARCH REPORT

| International application No. |
| --- |
| **PCT/CN2023/102392** |

**A.    CLASSIFICATION OF SUBJECT MATTER**

H04L12/18(2006.01)i;  H04L47/125(2022.01)i

According to International Patent Classification (IPC) or to both national classification and IPC

**B.    FIELDS SEARCHED**

Minimum documentation searched (classification system followed by classification symbols)

IPC：H04L

Documentation searched other than minimum documentation to the extent that such documents are included in the fields searched

Electronic data base consulted during the international search (name of data base and, where practicable, search terms used)

CNTXT; ENTXTC; WPABSC; VEN; ENTXT; CNKI; IEEE; IETF: 自动组播隧道, 网关, 中继, 组播, 优先级, 负载, 均衡, AMT, gateway, relay+, multicast, priority, load, balanc+

**C.    DOCUMENTS CONSIDERED TO BE RELEVANT**

| Category* | Citation of document, with indication, where appropriate, of the relevant passages | Relevant to claim No. |
| --- | --- | --- |
| X | CN 109246024 A (NEW H3C TECHNOLOGIES CO., LTD.) 18 January 2019 (2019-01-18) description, paragraphs [0032]-[0155], and figure 1 | 1-38 |
| A | CN 109218207 A (NEW H3C TECHNOLOGIES CO., LTD.) 15 January 2019 (2019-01-15) entire document | 1-38 |
| A | CN 113472667 A (NEW H3C INFORMATION SECURITY TECHNOLOGY CO., LTD.) 01 October 2021 (2021-10-01) entire document | 1-38 |
| A | CN 113824754 A (ZTE CORP.) 21 December 2021 (2021-12-21) entire document | 1-38 |
| A | WO 2017201750 A1 (HUAWEI TECHNOLOGIES CO., LTD.) 30 November 2017 (2017-11-30) entire document | 1-38 |
| A | G.Bumgardner. "Automatic Multicast Tunneling" *RFC 7450*, 20 December 2018 (2018-12-20), ISSN: 2070-1721, entire document | 1-38 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 December 2023** | **11 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/102392**

| Patent document cited in search report | | | Publication date (day/month/year) | Patent family member(s) | Publication date (day/month/year) |
|---|---|---|---|---|---|
| CN | 109246024 | A | 18 January 2019 | None | |
| CN | 109218207 | A | 15 January 2019 | None | |
| CN | 113472667 | A | 01 October 2021 | None | |
| CN | 113824754 | A | 21 December 2021 | None | |
| WO | 2017201750 | A1 | 30 November 2017 | None | |

Form PCT/ISA/210 (patent family annex) (July 2022)